# EUROPÄISCHE PATENTSCHRIFT

(11) **EP 2 058 254 B1**
(45) Veröffentlichungstag und Bekanntmachung des Hinweises auf die Patenterteilung: **27.06.2012**
(21) Anmeldenummer: 08019257.8
(22) Anmeldetag: 04.11.2008
(51) Int. Cl.: B65H 31/32

(54) **Vorrichtung zum Unterbrechen eines Produktstroms**
Device to interrupt a product flow
Dispositif destiné à interrompre un flux de produits

(30) Priorität: 06.11.2007 DE 102007052829
(43) Veröffentlichungstag der Anmeldung: 13.05.2009
(73) Patentinhaber: Gämmerler AG, 82538 Geretsried-Gelting (DE)
(72) Erfinder: Jahreiss, Frank, 82549 Königsdorf (DE)
(74) Vertreter: Manitz, Finsterwald & Partner GbR

(56) Entgegenhaltungen:
- US-A- 3 255 895
- US-B1- 6 543 989

## Beschreibung

Die vorliegende Erfindung betrifft eine Vorrichtung nach Anspruch 1 zum Unterbrechen eines Produktstroms und zum Zwischenspeichern von Produkten desselben, umfassend eine ungeteilte Produktauflage und eine Antriebseinrichtung, mit der die Produktauflage in den Produktstrom einbringbar und aus dem Produktstrom ausbringbar ist.

Derartige Vorrichtungen sind grundsätzlich bekannt und finden beispielsweise bei Kreuzlegern in der Drucknachbearbeitung Verwendung, um aus einem kontinuierlichen, schuppenförmigen Strom von Druckprodukten einzelne Produktstapel zu bilden, die übereinander um 180° verdreht abgelegt werden. Bei einem solchen Kreuzleger ist es erforderlich, dass der Abstand zwischen einzelnen Produkten innerhalb des Schuppenstroms in regelmäßigen Abständen durch Abbremsen und/oder Zwischenspeichern eines oder mehrerer Produkte vergrößert wird. Dies kann beispielsweise durch Bilden einer Barriere im Förderbereich oder durch eine Trenneinrichtung erfolgen, welche im freien Fall befindliche Produkte zu einem geeigneten Zeitpunkt auffängt. Die derart zwischengespeicherten Produkte müssen dann zu einem späteren Zeitpunkt wieder auf geeignete Weise freigegeben werden, um auf weitere, meist teilbare Produktauflagen zu gelangen.

Vorrichtungen der eingangs genannten Art sind beispielsweise in Form von rotierenden Trennschaufeln bekannt, die derart in den Produktstrom gedreht werden, dass einzelne Produkte für eine vorbestimmte Zeit auf einer der Schaufeln zu liegen kommen. Hierdurch wird eine Lücke im Produktstrom erzeugt und die Produkte werden kurzzeitig zwischengespeichert. Nachteilig ist bei einer solchen Ausführungsform jedoch, dass sich der Winkel zwischen der Produktauflage und den herabfallenden Produkten kontinuierlich ändert, dass relativ hohe Fallhöhen zurückgelegt werden müssen, dass eine Speicherkapazität nur für wenige Produkte vorhanden ist und dass der Platzbedarf vergleichsweise groß ist.

Aus der US-A-3,255,895 ist eine Vorrichtung nach dem Oberbegriff des Anspruchs 1 zum Unterbrechen eines Produktstroms und zum Zwischenspeichern von Produkten desselben bekannt, die eine ungeteilte Produktauflage umfasst, die in den Produktstrom einbringbar und aus dem Produktstrom ausbringbar ist. Hierbei wird durch eine Mechanik eine rotatorisch umlaufende Bewegung der Produktauflage und eine der umlaufenden Bewegung überlagerte oszillierende Bewegung bewirkt. Zur Durchführung dieser überlagerten Bewegung sind mehrere Motoren sowie Stellzylinder vorgesehen.

Es ist die Aufgabe der vorliegenden Erfindung, eine Vorrichtung der eingangs genannten Art derart weiterzubilden, dass die Trennung und Zwischenspeicherung des Produktstroms derart erfolgt, dass eine möglichst schonende Behandlung der Produkte möglich ist.

Die Lösung dieser Aufgabe erfolgt durch die Merkmale des Anspruchs 1. Erfindungsgemäß wird ein idealer Bewegungsablauf dadurch geschaffen, dass einer oszillierenden Bewegung, die vorzugsweise nicht ausschließlich in vertikaler Richtung verläuft, eine insbesondere kontinuierliche Umlaufbewegung überlagert wird. Durch die Überlagerung der umlaufenden Bewegung, mit der eine schnelle und beschleunigungsoptimierte Bewegung möglich ist, mit der oszillierenden Bewegung der Produktauflage wird die erforderliche ideale Bewegung der Produktauflage auf einfache Weise realisiert.

Die erfindungsgemäße Vorrichtung besitzt eine hohe Speicherkapazität für zwischenzuspeichernde Produkte und die Produktauflage kann so in den Produktstrom eingebracht werden, dass die Produkte so gut wie keinen freien Fall zurücklegen.

Vorteilhafte Ausführungsformen der Erfindung sind in der Beschreibung, der Zeichnung sowie den Unteransprüchen beschrieben.

Es kann vorteilhaft sein, wenn die Produktauflage kurzzeitig in einer Warteposition verweilt, bevor diese in den Produktstrom eintaucht.

Die Oszillationsbewegung der Produktauflage erfolgt durch einen Schwenkarm, da hierdurch der Einfluss auf die im Wesentlichen horizontale Ausrichtung der Produktauflage gering ist. Eine solche Ausführungsform lässt sich verglichen zu einer Linearführung kostengünstiger herstellen.

Nach einer weiteren vorteilhaften Ausführungsform kann der einzige Antriebsmotor ortsfest montiert sein. Auf diese Weise lassen sich die Herstellungskosten zusätzlich senken, da nur ein einziger Antriebsmotor verwendet wird. Durch ortsfeste Montage des Antriebsmotors werden die bewegten Massen verringert, was zusätzlich zu einer Kostensenkung und einem störungsfreien Betrieb beiträgt.

Da die Produktauflage drehbar an einem Verbindungsarm befestigt ist der mit der Kurvensteuerscheibe umläuft, kann die Vorrichtung außerhalb eines Fallschachtes für die Produkte des Produktstroms angeordnet werden.

Nach einer weiteren vorteilhaften Ausführungsform kann die Kurvensteuerscheibe so ausgebildet sein, dass diese bei ihrem Umlauf zumindest abschnittsweise eine im Wesentlichen lineare Absenkbewegung der Produktauflage bewirkt. Dies sorgt für eine äußerst schonende Behandlung der aufzufangenden Produkte, da diese von der sich linear nach unten bewegenden Produktauflage aufgefangen werden, ohne dass ein freier Fall zurückgelegt werden muss.

Nach einer weiteren vorteilhaften Ausführungsform liegt die Kurvensteuerscheibe an einem ortsfesten Anschlag an, der als Rolle ausgebildet ist. Auf diese Weise kann die Kurvensteuerscheibe reibungsarm an dem Anschlag abrollen und dadurch den Schlitten oszillierend bewegen, wodurch sich mit geringen Reibungsverlusten die Produktauflage sowohl hebt und senkt wie auch in den Fallschacht hinein und aus diesem hinaus bewegt.

Nach einer weiteren vorteilhaften Ausführungsform können Mittel vorgesehen sein, damit die Produktauflage bei ihrem Umlauf eine im Wesentlichen horizontale Ausrichtung beibehält. Beispielsweise kann die Produktauflage verschwenkbar an einem Verbindungsarm befestigt und über einen Riemen so angetrieben sein, dass bei umlaufendem Verbindungsarm die Produktlage ihre im Wesentlichen horizontale Ausrichtung beibehält. Diese Ausrichtung muss auch nicht rein horizontal sein sondern kann auch von der Horizontalen etwas abweichen.

Weiterhin ist es vorteilhaft, wenn die Periodendauer der kontinuierlich rotatorisch umlaufenden Bewegung der Produktauflage mit der Periodendauer der oszillierenden Bewegung der Produktauflage übereinstimmt, d.h. wenn beide Bewegungen synchronisiert sind.

Die vorstehend beschriebene Vorrichtung eignet sich grundsätzlich für beliebige Produkte und Produktströme. Eine besonders vorteilhafte Anwendung findet sich jedoch bei Kreuzlegern in der Drucknachbearbeitung. Bei derartigen Kreuzlegern kann es insbesondere vorteilhaft sein, zwei Vorrichtungen der vorstehend genannten Art einander gegenüberliegend so anzuordnen, dass deren Produktauflagen abwechselnd in den Produktstrom einbringbar sind. Auf diese Weise kann sich jeweils eine Produktauflage in die ideale Trennposition bewegen, während die jeweils andere Produktauflage den Rückweg in ihre Ausgangsposition antritt. Auf diese Weise werden sehr geringe Zykluszeiten und hohe Speicherkapazitäten erzielt.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: eine Seitenansicht einer Vorrichtung zum Unterbre- chen eines Produktstroms;
- Fig. 2a: eine perspektivische Vorderansicht einer nicht beanspruchten Vorrichtung;
- Fig. 2b: eine perspektivische Rückansicht der Vorrichtung von Fig. 2;
- Fig. 3a: eine perspektivische Vorderansicht einer weiteren nicht beanspruchten Ausführungsform einer Vorrichtung zum Unterbrechen ei- nes Produktstroms;
- Fig. 3b: eine perspektivische Rückansicht der Vorrichtung von Fig. 3a;
- Fig. 4a: eine perspektivische Vorderansicht einer Vor- richtung zum Unterbrechen eines Produktstroms;
- Fig. 4b: eine perspektivische Rückansicht der Vorrichtung von Fig. 4a;

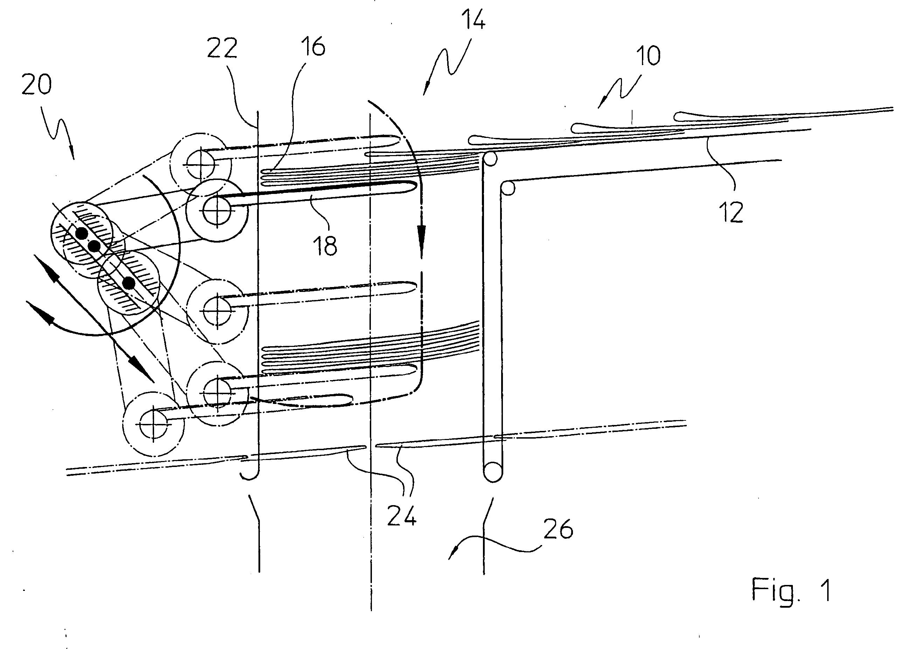

Fig. 1 zeigt eine Seitenansicht einer Vorrichtung zum Unterbrechen eines Produktstroms 10, der bei dem dargestellten Ausführungsbeispiel schuppenförmig angeordnete Druckprodukte umfasst, die von einem Förderband 12 in Richtung eines Fallschachtes 14 mit dem Falz voran angefördert werden. Zum zeitweiligen Unterbrechen des Produktstroms 10 und zum Zwischenspeichern einzelner Produkte 16 dient eine Vorrichtung, die eine ungeteilte, d.h. sich nicht öffnende Produktauflage 18, beispielsweise in Form eines Rechens, umfasst, die von einer Antriebseinrichtung 20 in den Fallschacht 14 einbringbar ist.

Wie Fig. 1 verdeutlicht, ist die Antriebseinrichtung 20 so ausgebildet, dass die Produktauflage 18 in einer im Wesentlichen horizontal gerichteten Bewegung in den Fallschacht 14 eingebracht wird und nachdem die Produktauflage 18 vollständig in den Fallschacht 14 eingebracht ist, wird die Produktauflage 18 in einer senkrecht nach unten gerichteten Linearbewegung innerhalb des Fallschachts 14 abgesenkt, bis die Produktauflage dann wieder aus dem Fallschacht 14 entfernt wird.

Das Bezugszeichen 22 in Fig. 1 bezeichnet eine Anschlagwand mit Durchbrechungen, durch welche einzelne Zinken der Produktauflage 18 in den Fallschacht 14 eingebracht werden können.

Anhand des in Fig. 1 dargestellten Bewegungsablaufs lässt sich erkennen, dass die Produktauflage 18 in den Produktstrom 10 eingebracht wird und anschließend die in den Fallschacht 14 geförderten Produkte aufnimmt, ohne dass diese eine große Fallhöhe zurücklegen müssen. Nach Absenken der Produktauflage 18 zusammen mit den darauf liegenden Produkten 16 wird die Produktauflage 18 wieder aus dem Fallschacht 14 entfernt, wenn das untere Ende des vertikalen Hubs erreicht ist. Hierbei wird die Produktauflage 18 wieder durch die in der Anschlagwand 22 vorgesehenen Durchbrechungen entfernt, so dass die Produktauflage 18 in einer horizontalen Bewegung unter den auf dieser aufliegenden Produkten 16 weggezogen wird. Anschließend müssen die Produkte nur noch eine geringe Fallstrecke überwinden, bis diese auf einer geteilten Produktauflage in Form eines Rechenpaares 24 zu liegen kommen, welches die Produkte anschließend in einen Drehkorb 26 des Kreuzlegers übergibt.

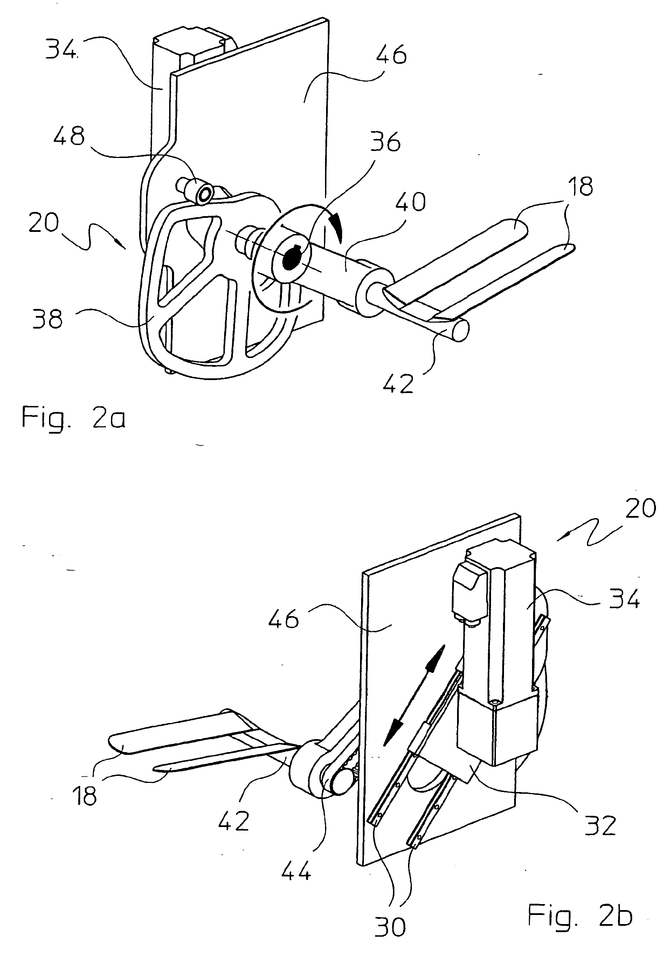

Die Fig. 2a und Fig. 2b zeigen in perspektivischer Ansicht den Aufbau der vorstehend beschriebenen Vorrichtung. Wie Fig. 2b zeigt, umfasst der Antrieb 20 für die Produktauflage 18, die zwei lang gestreckte Auflagefinger umfasst, eine Linearführung 30, auf der ein Schlitten 32 hin- und herbewegbar ist. Auf dem Schlitten 32 ist ein Antriebsmotor 34 befestigt, der bei dem dargestellten Ausführungsbeispiel als geregelter Servomotor ausgebildet ist. Mit Hilfe des Antriebsmotors 34 wird eine Welle 36 rotatorisch angetrieben, auf der drehfest einerseits eine Kurvensteuerscheibe 38 und andererseits ein Verbindungsarm 40 befestigt sind, an dessen oberem Ende die Produktauflage 18 befestigt ist.

Wie insbesondere Fig. 2b verdeutlicht, sind die rückwärtigen Enden der Produktauflage 18 auf einer Welle 42 befestigt, die am Ende des Verbindungsarms 40 drehbar gelagert ist. Die Welle 42 wird wiederum über einen Zahnriemen 44 angetrieben, der über ein nicht dargestelltes Getriebe ebenfalls von dem Antriebsmotor 34 so in Drehung versetzt wird, dass bei einem Umlauf des Verbindungsarms 40 sich die Welle 42 so dreht, dass die Produktauflage 18 ihre horizontale oder im Wesentlichen horizontale Ausrichtung stets beibehält.

Wie die Fig. 2a und 2b ferner zeigen, ist die Linearführung 30 unter einem Winkel von etwa 45° gegenüber der Horizontalen an einem Grundgestell bzw. einer Grundplatte 46 angeordnet und an dieser Grundplatte 46 befindet sich auch ein ortsfester Anschlag in Form einer Rolle 48, gegen den die Kurvensteuerscheibe 38 anliegt. Hierbei ist der Schlitten 32 durch ein nicht dargestelltes Federmittel (in Fig. 2b nach rechts oben) so vorgespannt, dass die Kurvensteuerscheibe 38 gegen den ortsfesten Anschlag 48 gedrückt wird.

Wenn die in den Figuren 1 bis 2b dargestellte Vorrichtung durch Inbetriebnahme des Antriebsmotors 34 in Betrieb gesetzt wird, dreht sich die Welle 36 und mit dieser zusammen die Kurvensteuerscheibe 38 sowie der Verbindungsarm 40. Hierdurch wird der Schlitten 32 entlang der Linearführung 30 gegen die Kraft der (nicht dargestellten) Federn bewegt, wodurch der Schlitten 32 einerseits in vertikaler Richtung und andererseits in horizontaler Richtung bewegt wird. Gleichzeitig dreht sich hierbei der Verbindungsarm 40, so dass auch hierdurch die Produktauflage 18 in horizontaler wie in vertikaler Richtung bewegt wird. Die Kurvensteuerscheibe 38 ist exzentrisch ausgebildet und weist einen solchen Verlauf auf, dass der in Fig. 1 dargestellte Bewegungszyklus der Produktauflage 18 erzielt wird, bei dem die Produktauflage 18 innerhalb des Fallschachtes 14 im Wesentlichen vertikal linear nach unten bewegt wird, ohne dass diese eine horizontale Bewegung durchführt. Erst am Ende dieser Linearbewegung wird die Produktauflage 18 durch eine geeignete Gestaltung der Steuerkurve 38 wieder aus dem Fallschacht 14 entfernt. Aufgrund des Antriebs der Produktauflage 18 über den Riemen 44 behält diese während des gesamten Umlaufs ihre horizontale oder im Wesentlichen horizontale Ausrichtung bei.

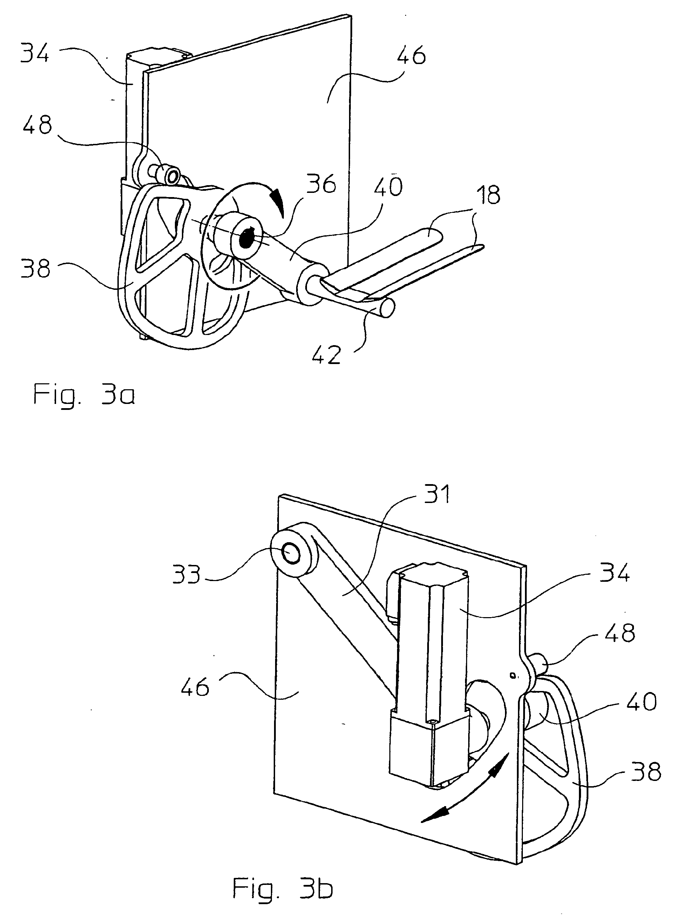

Die Fig. 3a und 3b zeigen eine weitere Ausführungsform einer Vorrichtung zum Unterbrechen eines Produktstroms, wobei für gleiche Bauteile gleiche Bezugszeichen verwendet sind. Diese Ausführungsform unterscheidet sich von der vorhergehenden darin, dass die zweite Antriebseinheit, die der kontinuierlich rotatorisch umlaufenden Bewegung der Produktauflage eine oszillierende Bewegung überlagert, nicht durch eine Linearführung sondern durch einen Schwenkarm 31 realisiert ist, der einseitig an einem Schwenklager 33 gelagert ist, und der durch eine nicht dargestellte Feder in Richtung der Rolle 48 vorgespannt ist. An dem entgegengesetzten Ende des Schwenkarms 31 ist der Antriebsmotor 34 montiert, der in gleicher Weise wie bei der ersten Ausführungsform die Welle 36 antreibt, auf der die Kurvenscheibe 38 und der Verbindungsarm 40 drehfest befestigt sind. Durch Abrollen der Kurvenscheibe 38 an der Rolle 48 dreht sich der Verbindungsarm 40 in der in Fig. 3a angegebenen Pfeilrichtung, wobei sich gleichzeitig die Welle 36 entsprechend der in Fig. 3b angegebenen Pfeilrichtung hin- und herbewegt. Diese oszillierende Bewegung ist im Gegensatz zu der reinen Linearbewegung bei der vorstehend beschriebenen Ausführungsform eine Schwenkbewegung, allerdings mit einem vergleichsweise großen Radius.

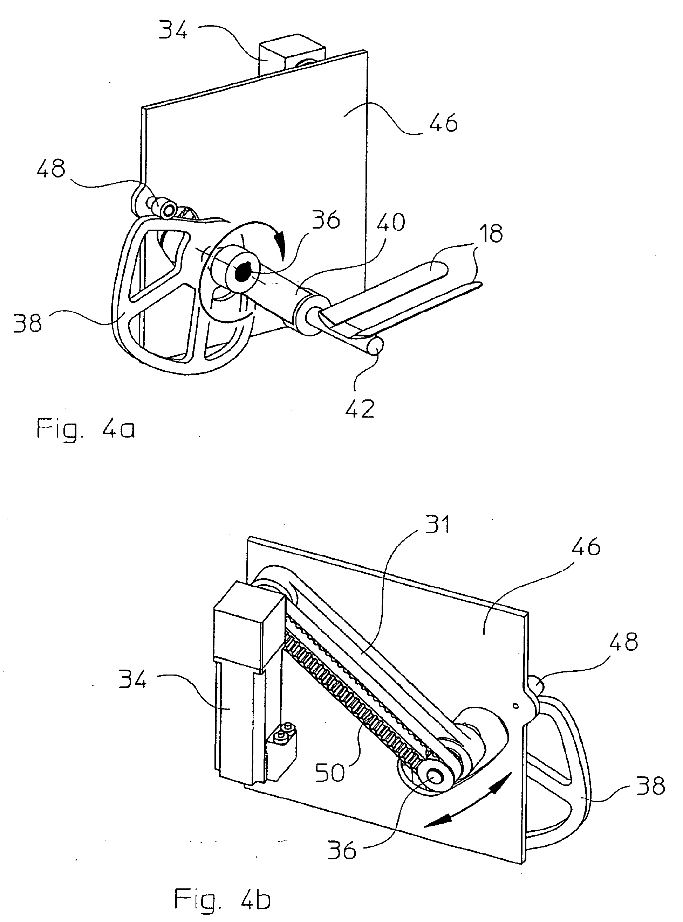

Die Fig. 4a und 4b zeigen eine weitere Ausführungsform, wobei wiederum für gleiche Bauteile gleiche Bezugszeichen verwendet sind. Die in den Fig. 4a und 4b dargestellte Ausführungsform unterscheidet sich von der vorhergehenden Ausführungsform wiederum in der zweiten Antriebseinheit für die oszillierende Bewegung der Produktauflage. Im Gegensatz zu der Ausführungsform der Fig. 3a und 3b ist bei dieser Ausführungsform der Antriebsmotor 34 ortsfest an der Grundplatte 46 befestigt. Die Welle 36 ist am freien Ende des Schwenkarms 31 frei beweglich gelagert, der durch eine nicht dargestellte Feder in Richtung der Rolle 48 vorgespannt ist, so dass der Schwenkarm 31 zusammen mit der Kurvenscheibe 38 und dem Verbindungsarm 40 entlang des in Fig. 4b dargestellten Doppelpfeils hin- und her oszillieren kann. Der einzige Antriebsmotor 34 treibt dabei einen Zahnriemen 50 an, der wiederum die Welle 36 in Drehung versetzt, so dass die Kurvensteuerscheibe 38 an der Rolle 48 abrollen kann und sich dadurch einerseits der Verbindungsarm 40 kontinuierlich dreht, während die Welle 36 einer oszillierenden Bewegung unterworfen ist.

### Bezugszeichenliste

- 10: Produktstrom
- 12: Förderband
- 14: Fallschacht
- 16: Produkte
- 18: Produktauflage
- 20: Antrieb
- 22: Anschlagwand
- 24: Rechenpaar
- 26: Drehkorb
- 30: Linearführung
- 31: Schwenkarm
- 32: Schlitten
- 33: Schwenklager
- 34: Antriebsmotor
- 36: Welle
- 38: Kurvensteuerscheibe
- 40: Verbindungsarm
- 42: Welle
- 44: Zahnriemen
- 46: Grundplatte
- 48: Rolle
- 50: Zahnriemen

## Patentansprüche

1. Vorrichtung zum Unterbrechen eines Produktstroms und zum Zwischenspeichern von Produkten desselben, umfassend eine ungeteilte Produktauflage (18) und eine Antriebseinrichtung (20), mit der die Produktauflage (18) in den Produktstrom einbringbar und aus dem Produktstrom ausbringbar ist, wobei
die Antriebseinrichtung eine rotatorisch umlaufende Bewegung der Produktauflage (18) und eine der umlaufenden Bewegung überlagerte, oszillierende Bewegung der Produktauflage (18) bewirkt,
**dadurch gekennzeichnet daß,**
die Antriebseinrichtung einen einzigen Antriebsmotor (34) aufweist, die Antriebseinrichtung einen Schwenkarm (31) umfasst, an dessen freiem Ende eine Kurvensteuerscheibe (38) drehbar befestigt ist, die an einem ortsfesten Anschlag (48) anliegt, und
die Produktauflage (18) drehbar an einem Verbindungsarm (40) befestigt ist, der zusammen mit der Kurvensteuerscheibe (38) umläuft, die von dem einzigen Antriebsmotor (34) angetrieben wird, und die die oszillierende Bewegung bewirkt.

2. Vorrichtung nach Anspruch 1,
**dadurch gekennzeichnet, dass**
der einzige Antriebsmotor (34) ortsfest montiert ist.

3. Vorrichtung nach zumindest einem der vorstehenden Ansprüche,
**dadurch gekennzeichnet, dass**
die Kurvensteuerscheibe (38) so ausgebildet ist, dass diese bei ihrem Umlauf abschnittsweise eine lineare Absenkbewegung der Produktauflage (18) bewirkt.

4. Vorrichtung nach zumindest einem der vorstehenden Ansprüche,
**dadurch gekennzeichnet, dass**
die Kurvensteuerscheibe (38) an einem ortsfesten Anschlag anliegt, der insbesondere als Rolle (48) ausgebildet ist.

5. Vorrichtung nach zumindest einem der vorstehenden Ansprüche,
**dadurch gekennzeichnet, dass**
die Produktauflage (18) bei ihrem Umlauf ihre im Wesentlichen horizontale Ausrichtung beibehält.

6. Vorrichtung nach Anspruch 1,
**dadurch gekennzeichnet, dass**
die Periodendauer der umlaufenden Bewegung gleich der Periodendauer der oszillierenden Bewegung ist.

7. Vorrichtung nach Anspruch 1,
**dadurch gekennzeichnet, dass**
die oszillierende Bewegung eine Bewegungskomponente in horizontaler Richtung aufweist.

8. Kreuzleger mit zwei Vorrichtungen nach zumindest einem der vorstehenden Ansprüche, die einander gegenüberliegend so angeordnet sind, dass deren Produktauflagen (18) abwechselnd in den Produktstrom (10) einbringbar sind.

## Claims

1. An apparatus for interrupting a product flow and for the intermediate storing of products thereof comprising an undivided product support (18) and a drive device (20) with which the product support (18) can be brought into the product flow and out of the product flow, wherein
the drive device effects a rotationally revolving movement of the product support (18) and an oscillating movement of the product support (18) superimposed on the revolving movement, **characterised in that**
the drive device has a single drive motor (34);
the drive device includes a pivot arm (31) to whose free end a cam control disc (38) is rotatably fastened which contacts a fixed-position abutment (48); and
the product support (18) is rotatably fastened to a connection arm (40) which revolves together with the cam control disc (38) which is driven by the single drive motor (34) and which effects the oscillating movement.

2. An apparatus in accordance with claim 1,
**characterised in that**
the only drive motor (34) is mounted in a fixed position.

3. An apparatus in accordance with at least one of the preceding claims,
**characterised in that**
the cam control disc (38) is designed so that, on its revolving, it effects a section-wise linear lowering movement of the product support (18).

4. An apparatus in accordance with at least one of the preceding claims,
**characterised in that**
the cam control disc (38) contacts a fixed-position abutment which is in particular made as a roller (48).

5. An apparatus in accordance with at least one of the preceding claims,
**characterised in that**
the product support (18) maintains its substantially horizontal alignment on its revolving.

6. An apparatus in accordance with claim 1,
**characterised in that**
the period length of the revolving movement is equal to the period length of the oscillating movement.

7. An apparatus in accordance with claim 1,
**characterised in that**
the oscillating movement has a movement component in the horizontal direction.

8. A cross-stacker having two apparatuses in accordance with at least one of the preceding claims which are arranged opposite one another such that their product supports (18) can be alternately introduced into the product flow (10).

## Revendications

1. Dispositif destiné à interrompre un flux de produits et à stocker de façon intermédiaire des produits de ce flux, comprenant un support de produit d'un seul tenant (18) et un moyen d'entraînement (20), au moyen duquel le support de produit (18) peut être amené dans le flux de produits et peut être sorti du flux de produits, dans lequel le moyen d'entraînement entraîne un mouvement périphérique rotatif du support de produit (18) et un mouvement oscillant du support de produit (18) superposé au mouvement périphérique,
**caractérisé en ce que**
le moyen d'entraînement comprend un moteur d'entraînement unique (34),
le moyen d'entraînement comprend un bras pivotant (31), à l'extrémité libre duquel est fixé un disque de commande à came (38) avec faculté de rotation, qui s'applique contre une butée stationnaire (48), et
le support de produit (18) est fixé avec faculté de rotation sur un bras de liaison (40) qui tourne conjointement avec le disque de commande à came (38), celui-ci étant entraîné par le moteur d'entraînement unique (34) et provoquant le mouvement oscillant.

2. Dispositif selon la revendication 1,
**caractérisé en ce que** le moteur d'entraînement unique (34) est monté stationnaire.

3. Dispositif selon l'une au moins des revendications précédentes,
**caractérisé en ce que** le disque de commande à came (38) est réalisé de telle façon que celui-ci provoque par secteurs, lors de sa rotation, un mouvement d'abaissement linéaire du support de produit (18).

4. Dispositif selon l'une au moins des revendications précédentes,
**caractérisé en ce que** le disque de commande à came (38) est appliqué contre une butée stationnaire qui est réalisée en particulier sous forme de galet (48).

5. Dispositif selon l'une au moins des revendications précédentes,
**caractérisé en ce que** le support de produit (18) conserve son orientation essentiellement horizontale lors de sa rotation.

6. Dispositif selon la revendication 1,
**caractérisé en ce que** la durée de la période du mouvement rotatif est égale à la durée de la période du mouvement oscillant.

7. Dispositif selon la revendication 1,
**caractérisé en ce que** le mouvement oscillant présente une composante de mouvement en direction horizontale.

8. Appareil de pose en croix comprenant deux dispositifs selon l'une au moins des revendications précédentes, qui sont agencés en opposition mutuelle de telle façon que leurs supports de produits (18) peuvent être amenés alternativement dans le flux de produits (10).
